# EUROPEAN PATENT APPLICATION

(11) **EP 0 650 822 A2**
(43) Date of publication of application: **03.05.1995**
(21) Application number: 94117121.7
(22) Date of filing: 28.10.1994
(51) Int. Cl.: B29C 70/78, B29C 44/14, B29C 51/38, B29C 51/14

(54) **A method of forming a product integrally with a surface layer and the product itself**

(30) Priority: 29.10.1993 JP 272664/93
(71) Applicant: TOYOTA JIDOSHA KABUSHIKI KAISHA, Aichi-ken (JP)
(72) Inventor: Hirakawa, Hiroyuki, Toyota-shi, Aichi-ken (JP)
(74) Representative: KUHNEN, WACKER & PARTNER

(57) **Abstract**

This method of forming a product integrally with a surface layer material achieves to use a single forming die capable of vacuum forming and urethane forming and to require no preheating step before vacuum forming, by employing a surface layer material (2) having a sufficient shapability at an urethane forming temperature and an urethane base (1) which can endure residual stress caused by elogation of the surface layer material after vacuum forming. Thus, the product can be manufactured at a low cost. First, a surface layer material (2) which comprises a synthetic resin having a 30% modulus of 0.1 to 2.0 kg/cm is placed at a forming die (a first die (3)) which is capable of vacuum forming and urethane forming, and vacuum formed into a predetermined shape. Second, a liquid urethane raw material which becomes an urethane base (1) having a maximum bending load of 30N or more after forming is introduced into a cavity of the forming die (3) and solidified, thereby formed into the urethane base (1) integrally with the surface layer material (2).

## Description

### BACKGROUND OF THE INVENTION

### Field of the Invention

The present invention relates to a method of forming a product integrally with a surface layer, and more particularly, to a method of forming a product in which a surface layer material is integrally formed on the surface of an urethane base, and to the product obtained thereby. This product according to the present invention can be suitably used as automotive interior component parts such as door trims, arm rests, and instrument panel garnishes.

### Description of the Related Art

Conventionally, a product formed integrally with a surface layer material in which a surface layer material composed of a synthetic resin such as a polyvinyl chloride sheet is integrally formed on the surface of an urethane base composed of hard or semi-hard urethane foam has been used as an automotive interior component part, for example, a door trim.

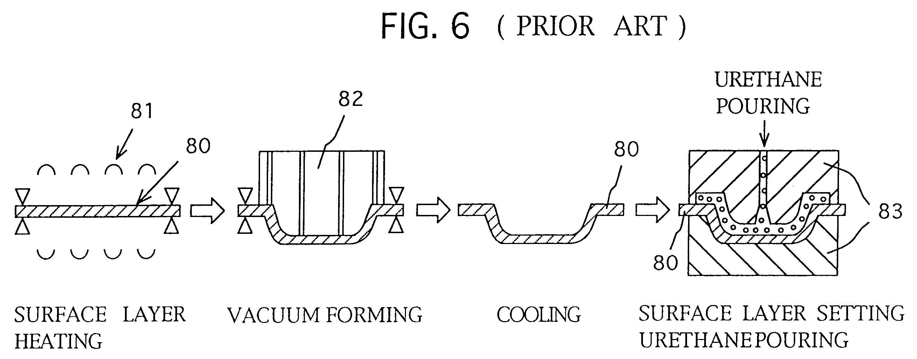

This product is formed by using a vacuum forming die and an urethane forming die, as shown in process drawings of Figure 6. In the conventional forming method, first, a surface layer material 80 composed of a synthetic resin such as a polyvinyl chloride sheet is heated to about 140 to 150°C by a heater 81 and softened. Second, the softened surface layer material 80 is set at a vacuum forming die 82 having a die surface in a predetermined shape, and drawn down into close contact with that die surface by vacuum and formed in a predetermined shape. After the shaped surface layer material 80 is removed from the vacuum forming die 82 and cooled down, the surface layer material 80 is set at a shaped die surface of an urethane forming die 83 which is controlled at an urethane forming temperature (about 60 to 100°C in general). Then, a liquid urethane raw material is introduced into a cavity of the urethane forming die 83 and solidified, thereby forming an urethane base comprising hard or semi-hard urethane foam integrally with the surface layer material 80. Thus, a product formed integrally with a surface layer is obtained.

As described in the above, the conventional method of forming a product integrally with a surface layer employs two forming dies consisting of the vacuum forming die 82 and the urethane forming die 83, and, in addition, needs to preheat the surface layer material 80 before vacuum forming. Therefore, both the cost of forming dies and the number of processing steps are increased, which inevitably increases the production costs of the product. The reason why the surface layer material 80 is preheated to be softened beforehand is to render a predetermined shape to the surface layer material 80 during vacuum forming and to prevent deformation of the product after urethane forming by decreasing residual stress of the surface layer material 80 caused by elogation during vacuum forming.

Japanese Unexamined Patent Publication (KOKAI) No.266613/1991 discloses a method of forming an automotive seat as a product formed integrally with a surface layer material in which a surface layer material is composed of fabrics or the like and an urethane base is composed of soft urethane foam such as an urethane slab, by using a single forming die capable of vacuum forming and urethane forming.

This forming die capable of vacuum forming and urethane forming comprises, as shown in Figure 7, a first die 91 having a first cavity surface 91a with which a surface layer material 90 is brought in close contact so as to be formed in a predetermined shape, and suction holes 91b for vacuuming which are open to the first cavity surface 91a; and a second die 92 having a second cavity surface 92a which constitutes a cavity for forming an urethane base together with the first cavity surface 91a of the first die 91. First, a fabric as the surface layer material 90 is preheated and softened. Second, the softened fabric is placed at the first die 91 which is controlled at an urethane forming temperature in such a manner to cover a cavity of the first die 91, and drawn down via the suction holes 91b into close contact with the first cavity surface 91a by vacuum, thereby formed in a predetermined shape. Then, after a liquid urethane raw material is introduced into the cavity, the cavity is closed with the second die 92 which is also controlled at the urethane forming temperature, and the urethane is solidified. Thus, the urethane base 93 is formed integrally with the surface layer material 90.

The method disclosed in this publication, however, still requires a step of preheating the surface layer material 90 before vacuum forming. This is because, unless the surface layer material 90 is preheated to be softened, the surface layer material 90 cannot be brought in close contact with the cavity surface 91a of the first die 91 and accordingly cannot acquire a predetermined shape.

The method disclosed in this publication employs fabrics as the surface layer material 90 and an urethane slab and other soft urethane foam as the urethane base 93. Fabrics as the surface layer material 90 has a lower residual stress caused by elogation during vacuum forming than synthetic resins such as a polyvinyl chloride sheet. Therefore, when soft urethane foam is used as the urethane base 93, there is little fear of product deformation due to the residual stress of the surface layer material in contrast to the case where hard or semi-hard urethane foam is used as the urethane base 93. Besides, deformation of about several millimeters causes no problem to seats in general.

### SUMMARY OF THE INVENTION

The present invention has been developed in view of the foregoing circumstances.

It is, therefore, an object of the present invention to provide a method of forming a product integrally with a surface layer material, which can employ a single forming die capable of vacuum forming and urethane forming in order to reduce the cost of forming dies and manufacture the product at a low cost.

It is a further object of the present invention to provide a method of forming a product integrally with a surface layer material, which requires no preheating step before vacuum forming the surface layer material, in order to reduce the number of processing steps and manufacture the product at a low cost.

In carrying out the above objects, it is a still further object of the present invention to provide a method of forming a product integrally with a surface layer material, which uses a surface layer material having a sufficient shapability at a temperature as low as an urethane forming temperature, and which uses an urethane base which can endure residual stress caused by elogation of the surface layer material formed at the urethane forming temperature.

The method according to the present invention is a method of forming a product integral with a surface layer material which is provided with an urethane base and a surface layer material formed integrally on the surface of the urethane base, comprising the steps of:
placing a surface layer material having a 30% modulus of 0.1 to 2.0 kg/cm at an urethane forming temperature at a forming die which is capable of vacuum forming and urethane forming and controlled at the urethane forming temperature, and drawing down the surface layer material into close contact with a cavity surface of the forming die by vacuum, thereby vacuum forming the surface layer material in a predetermined shape; and
introducing into a cavity of the forming die a liquid urethane raw material which has a maximum bending load of 30 N or more in a solid condition at room temperature, and solidifying the liquid urethane raw material, thereby forming the urethane base integrally with the surface layer material.

Preferably, residual stress of the surface layer material after vacuum forming is lessened by decreasing an elogation ratio of the surface layer material during vacuum forming. For this purpose, it is desirable that, in placing the surface layer material at the forming die, a peripheral portion of the the surface layer material is movably held at the forming die and that the surface layer material is vacuum formed while being transferred into the cavity surface by a predetermined distance. For the same purpose, it is desirable that, in placing the surface layer material at the forming die, the surface layer material is held at the forming die in a condition in which the surface layer material is loosened by a predetermined amount.

Now, the functions and operations of the method according to the present invention will be described.

The method of forming a product integrally with a surface layer material according to the present invention employs a surface layer material having a 30% modulus of 0.1 to 2.0 kg/cm at an urethane forming temperature, and an urethane base having a maximum bending load of 30N or more.

The employment of the surface layer material satisfying the predetermined 30% modulus value achieves to render a predetermined shape to the surface layer material at a temperature as low as an urethane forming temperature, without preheating the surface layer material before vacuum forming. Further, despite of formed at the temperature as low as the urethane forming temperature, the surface layer material attains a small residual stress caused by elogation after vacuum forming. In addition to the small residual stress caused by the elogation of the surface layer material, the employment of an urethane base having a maximum bending load of 30N or more allows the urethane base to endure the residual stress caused by the elogation of the surface layer material which has been formed at the urethane forming temperature, and accordingly, securely prevents product deformation after urethane forming.

Therefore, the method of forming a product integrally with a surface layer material according to the present invention accomplishes to employ only a single forming die capable of vacuum forming and urethane forming, and to require no preheating step before vacuum forming.

When a surface layer material having a 30% modulus smaller than 0.1 kg/cm at an urethane forming temperature is employed, a crimp pattern on a designed outer surface, if any, may disappear after vacuum forming. On the other hand, when a surface layer material having a 30% modulus larger than 2.0 kg/cm at an urethane forming temperature, there is a fear that the surface layer material cannot acquire a predetermined shape sufficiently in vacuum forming.

Further, when an urethane base having a maximum bending load smaller than 30N is employed, there is a fear that the urethane base cannot endure residual stress caused by elogation of the surface layer material after vacuum forming, and that a product obtained will be deformed.

In the method according to the present invention, in placing the surface layer material at the forming die, a peripheral portion of the surface layer material may be movably held at the forming die, and the surface layer material may be vacuum formed while being transferred into the cavity surface by a predetermined distance. This achieves to decrease the elogation ratio of the surface layer material during vacuum forming and to lessen residual stress of the surface layer material after vacuum forming.

Further, in placing the surface layer material at the forming die, the surface layer material may be held at the forming die in a condition in which the surface layer material is loosened by a predetermined amount. In this case, the elogation ratio of the surface layer material during vacuum forming can be securely decreased by a certain value, and accordingly residual stress of the surface layer material after vacuum forming can be securely decreased.

The method of forming a product integrally with a surface layer material and a molding apparatus according to the present invention have following advantages.

The employment of a surface layer material which has a sufficient shapability at a temperature as low as an urethane forming temperature, and an urethane base which can endure residual stress caused by elogation of the surface layer material formed at the urethane forming temperature achieve to use a single forming die capable of vacuum forming and urethane forming, and to require no preheating step before vacuum forming. Therefore, the cost of forming dies and the number of processing steps are decreased and, accordingly, the product formed integrally with a surface layer material can be manufactured at a low cost.

Further, in placing the surface layer material at the forming die, a peripheral portion of the surface layer material may be movably held at the forming die, and the surface layer material may be vacuum formed while being transferred into the cavity surface by a predetermined distance. In this case, the elogation ratio of the surface layer material during vacuum forming can be lowered and residual stress of the surface layer material after vacuum forming can be lessened. Further, in placing the surface layer material at the forming die, the surface layer material may be held at the forming die in a condition in which the surface layer material is loosened by a predetermined amount. In this case, the elogation ratio of the surface layer material during vacuum forming can be securely decreased by a certain value, and residual stress of the surface layer material after vacuum forming can be securely decreased. As a result, it is possible to securely prevent product deformation caused by residual stress of the surface layer material.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed description, all of which forms a part of the disclosure:
Figure 1 is a diagram partly in section showing a state in which a surface layer material 2 is set at a first die 3 according to a first preferred embodiment of the present invention;
Figure 2 is a diagram partly in section showing a state after the surface layer material 2 is vacuum formed according to the first preferred embodiment of the present invention;
Figure 3 is a diagram partly in section showing a state in which an urethane base 1 is formed integrally with the surface layer material 2 according to the first preferred embodiment of the present invention;
Figure 4 is a diagram partly in section showing a state in which a surface layer material 2 is set at a first die 3 according to a second preferred embodiment of the present invention;
Figure 5 is a diagram partly in section showing a state after the surface layer material 2 is vacuum formed according to the second preferred embodiment of the present invention;
Figure 6 is process drawings illustrating the steps of a conventional method of forming a product integrally with a surface layer material; and
Figure 7 is a cross sectional diagram of a molding apparatus according to another conventional method of forming a product integrally with a surface layer material.

### DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

### First Preferred Embodiment

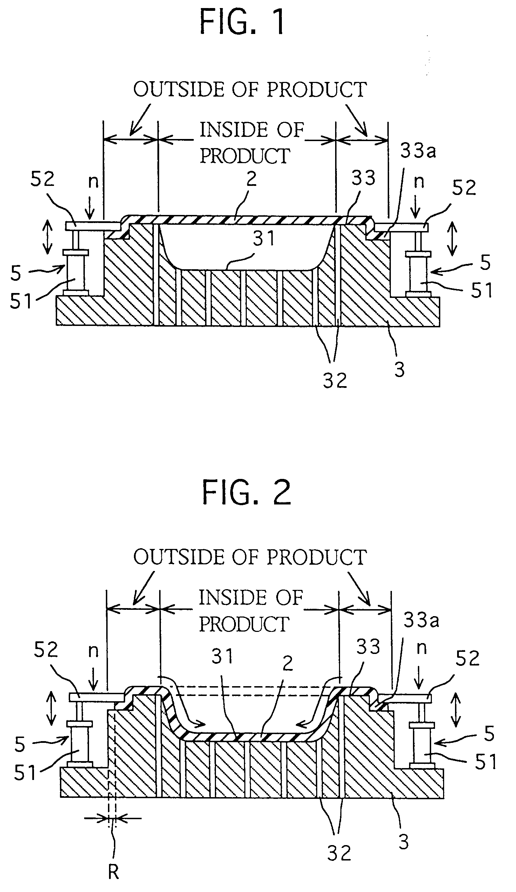

A first preferred embodiment of the present invention is a method of forming an automotive door trim as a product integral with a surface layer which is provided with an urethane base 1 and a surface material 2 which is formed integrally on the surface of the urethane base 1, by using an apparatus for forming a product integrally with a surface layer shown in cross-sectional diagrams of Figures 1 to 3.

This molding apparatus is capable of vacuum forming and urethane forming, and comprises a first die 3 including a first cavity surface 31 having a contour of a surface layer material 2 which constitutes a door trim, and suction holes 32 for vacuuming which are open to the first cavity surface 31; a second die 4 including a second cavity surface 41 having a contour of an urethane base 1 which constitutes the door trim, and an urethane filler hole 42 which is open to the second cavity surface 41; and clamp mechanisms 5.

The first die 3 and the second die 4 can be controlled to have temperatures of about 60 to 100°C by a temperature controller not shown. The die surface of the first die 3 comprises the first cavity surface 31, and a peripheral die surface 33 positioned on an outer periphery of the first cavity surface 31 and having a stepped portion 33a on its outermost periphery. This stepped portion 33a opposes to a fore end portion of a clamp 52 of each clamp mechanism 5 which will be described later, so that the stepped portion 33a and each clamp 52 can pinch the periphery of the surface layer material 2. Concerning the surface layer material 2 after vacuum forming, a portion within the first cavity surface 31 of the first die 3 corresponds to the inside of a finished product of the surface layer material 2, and a portion on the peripheral die surface 33 of the first die 3 corresponds to the outside of the finished product of the surface layer material 2. The suction holes 32 of the first die 3 are designed to have an inner hole diameter of 1 to 5 mm and connected to a vacuum pump not shown.

The clamp mechanisms 5 of the molding apparatus according to the first preferred embodiment serve to lessen elogation of the surface layer material 2 during vacuum forming. Each clamp mechanism 5 comprises an air cylinder 51, and a clamp 52 which can be controlled to have a clamp pressure n of 0.5 to 5.0 kg/cm² by the air cylinder 51. The control of the clamp pressure n accomplishes the control of the amount of the surface layer material 2 sliding into the first cavity surface 31. When the clamp pressure n is set from 0.5 to 5.0 kg/cm², a travel distance R from an end surface of the stepped portion 33a to an end surface of the surface layer material 2 during vacuum forming can be controlled in a range from 0 to 25 mm.

By employing the molding apparatus described in the above, a product was formed integrally with a surface layer in the following method. A surface layer material 2 prepared had two layers comprising a polyvinyl chloride (PVC) skin layer of 0.4 mm in thickness t and a PVC foam layer of 2.0 mm in thickness t and 12 times in expansion ratio. The whole surface layer material 2 had a 30 % modulus of 0.7 kg/cm at 80°C. A prepared liquid urethane raw material for the urethane base 1 was to contain glass filler by 15 % by weight after forming, and to be 1500 g/m² at a thickness of 4 mm after 3.3 times foaming and to have a maximum bending load of 50 N after forming.

First, the surface layer material 2 kept at room temperature was placed on the peripheral die surface 33 of the first die 3 which was controlled at 80°C, and the peripheral portion of the surface layer material 2 was held by the clamp mechanisms 5 under a clamp pressure n of 1.0 kg/cm². In this state, the peripheral portion of the surface layer material 2 was pinched between the stepped portion 33a of the peripheral die surface 33 and the clamps 52 of the clamp mechanisms 5 in such a manner that an end surface of the peripheral portion of the surface layer material 2 lay on the same plane as an end surface of the stepped portion 33a. The control of the clamp pressure at 1.0 kg/cm² allowed a travel distance R from the end surface of the stepped portion 33a to the end surface of the surface layer material 2 during vacuum forming (the amount of the surface layer material 2 sliding into the first cavity surface 31 during vacuum forming) to be set at 10 mm. Second, the vacuum pump not shown was actuated to draw down the surface layer material 2 by vacuum via the suction holes 32. Thus, the surface layer material 2 was brought in close contact with the first cavity surface 31 and molded in a predetermined shape, while being slided into the first cavity surface 31 of the first die 3 by 10 mm.

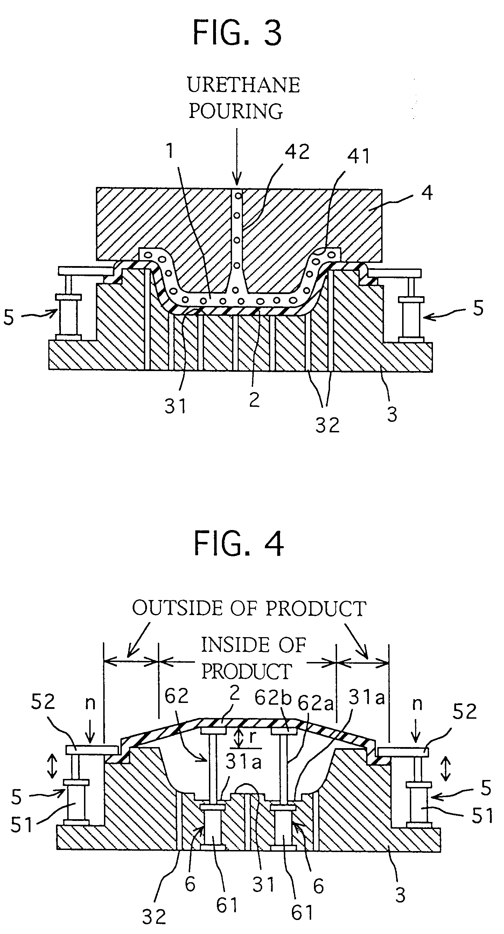

Next, as shown in Figure 3, the first die 3 was closed with the second die 4 which was also controlled at 80°C, and the liquid urethane raw material was introduced into a cavity formed between the first die 3 and the second die 4 through the urethane filler hole 42, and solidified, thereby forming the urethane base 1 integrally with the surface layer material 2. Cure time after finishing introducing the liquid urethane raw material to removing a product from the dies was 45 seconds.

This preferred embodiment employed the surface layer material 2 having a 30 % modulus of 0.7 kg/cm at an urethane forming temperature (80°C in this preferred embodiment). Therefore, without being preheated before vacuum forming, the surface layer material 2 could be vacuum formed into a predetermined shape by using a single forming die which was capable of vacuum forming and urethane forming and controlled at the urethane forming temperature.

Further, in this preferred embodiment, the surface layer material 2 was vacuum formed while being slided into the first cavity surface 31 by 10 mm. This also reduced the elogation ratio of the surface layer material 2 after vacuum forming. Further, when the surface layer material 2 was set at the first die 3 which was controlled at the urethane forming temperature, only the portion of the surface layer material 2 corresponding to the outside of the finished product was heated by the contact with the peripheral die surface 33 of the first die 3. The portion of the surface layer material 2 corresponding to the inside of the finished product was not heated until the portion was brought into contact with the first cavity surface 31 during vacuum forming. Therefore, the portion of the surface layer material 2 corresponding to the outside of the finished product had a higher elogation ratio than the portion corresponding to the inside of the finished product, owing to the advanced heating. As a result, in this preferred embodiment, the portion of the surface layer material 2 corresponding to the inside of the finished product after vacuum forming attained a sharp decrease in elogation ratio and, accordingly, a sharp decrease in residual stress. In this preferred embodiment, the portion of the surface layer material 2 corresponding to the inside of the finished product after vacuum forming had an elogation ratio decreased by approximately 6 %, when compared with the case of employing the same surface layer material having a 30 % modulus of 0.7 kg/cm at 80°C and setting the sliding distance of the surface layer material 2 into the fist cavity surface 31 during vacuum forming to be 0 mm.

In the meanwhile, since the employed urethane base 1 had a maximum bending load of 50 N, this urethane base 1 sufficiently endured residual stress caused by the elogation of the surface layer material 2.

Therefore, in this preferred embodiment, although the surface layer material 2 was formed at a temperature as low as an urethane forming temperature, it was possible to effectively prevent product deformation due to the residual stress of the surface layer material 2 after the urethane base 1 was formed.

Further, since the portion of the surface layer material 2 corresponding to the inside of the finished product attained a decreased elogation ratio, a crepe pattern or the like on the surface layer material 2, if any, remained as before even after vacuum forming. In addition, since the PVC foam layer constituting the surface layer material 2 also attained a decreased elogation ratio, cushioning performance was enhanced.

In the conventional method in which the surface layer material 2 is preheated to about 140 to 150°C, a large diameter of suction holes for vacuuming of a vacuum forming die causes marks of the suction holes to be printed on a designed outer surface of the surface layer material 2. To avoid this defect, in the conventional method in which the surface layer material 2 is preheated, it is necessary to employ as a vacuum forming die a porous die having fine continuous holes of about 10 to 50 microns. This type of porous dies are expensive when compared with ordinary steel dies and A-1 dies. Further, when a liquid urethane raw material leaks into and stuffs up the fine holes of the porous die, vacuuming becomes impossible. On the contrary, in this preferred embodiment, since the surface layer material 2 is vacuum formed at a temperature as low as an urethane forming temperature, there is no fear of printing marks of the suction holes 32 on a designed outer surface of the surface layer material 2. Therefore, there is no need to employ a porous die in contrast to the conventional method, and even when the suction holes 32 for vacuuming of the first die 3 have a large inner diameter of about 1 mm, it is possible to form a superior surface layer without any mark of the suction holes 32. Further, even when the suction holes 32 are stuffed with the liquid urethane raw material, the suction holes 32 can be easily reprocessed by drilling or the like.

In summary, according to this preferred embodiment, a step of preheating the surface layer material 2 is not required, and a product formed integrally with the surface layer can be manufactured by using a single forming die which is capable of vacuum forming and urethane forming and which is not a porous die. Consequently, a product formed integrally with a surface layer material can be manufactured at a low cost by reducing the cost of forming dies and the number of processing steps.

### Second Preferred Embodiment

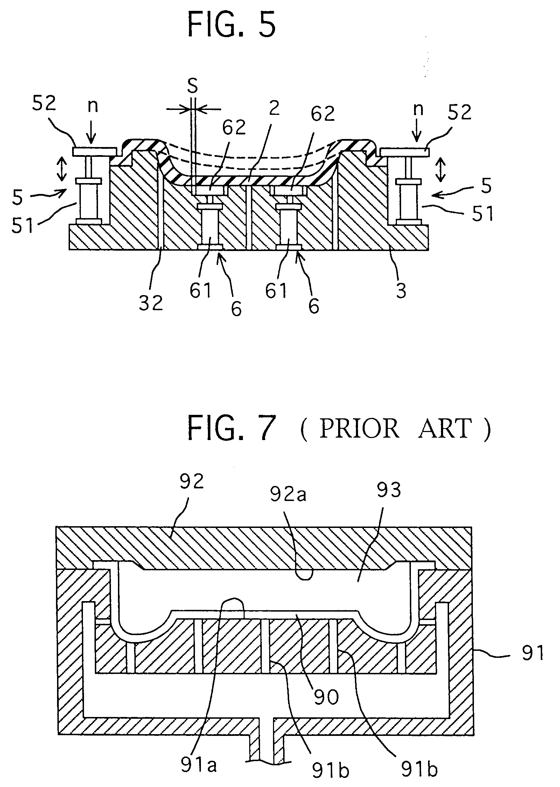

As shown in cross sectional diagrams of Figures 4 and 5, an apparatus for forming a product integrally with a surface layer according to this preferred embodiment of the present invention has the same construction as the molding apparatus according to the first preferred embodiment except that a pair of surface layer material lifting mechanisms 6 are provided to the first die 3. In the second preferred embodiment, the surface layer material lifting mechanisms 6 serve to lessen the elogation of the surface layer material 2 during vacuum forming, and can control an upwardly loosened amount r of the surface layer material 2, when the surface layer material 2 is set at the first die 3.

Each of the surface layer material lifting mechanisms 6 comprises an air cylinder 61 disposed in the first die 3, and a protruding rod 62 a protruding amount of which can be controlled by the air cylinder 61. The protruding rod 62 comprises a rod portion 62a, and a lifting base 62b disposed at a fore end of the rod portion 62a and serving to lift the surface layer material 2. The lifting base 62b of the protruding rod 62 can be stored in a concave portion 31a which is open to the first cavity surface 31 of the first die 3, and a gap s of 1 mm is formed between the concave portion 31a and the lifting base 62b. The other construction of the molding apparatus according to this preferred embodiment is the same as that of the molding apparatus according to the first preferred embodiment.

A product integral with a surface layer was formed as follows by using the molding apparatus having the above construction. The same materials as those used in the first preferred embodiment were prepared as the liquid urethane raw material for the urethane base 1 and the surface layer material 2.

The surface layer material 2 kept at room temperature was placed on the peripheral die surface 33 of the first die 3 which was controlled at 80°C, and the actuation of the air cylinders 61 raised the protruding rods 62 and accordingly lifted the surface layer material 2 by contacting the lifting bases 62b of the protruding rods 62 with a lower surface of the surface layer material 2, thereby making a certain amount of the surface layer material 2 loosened upwardly. The loosened amount r of the surface layer material 2 can be determined in accordance with the 30 % modulus of the surface layer material 2, the maximum bending load of the urethane base 1, the desired shape of a product to be formed, the temperature of the forming die, and the like, so that residual stress caused by elogation of the surface layer material 2 after vacuum forming is restricted to a predetermined value or less. In this preferred embodiment, the loosened amount r was designed to be 15 mm.

Next, the peripheral portion of the surface layer material 2 was held by the clamp mechanisms 5 under a clamp pressure n of 5.0 kg/cm². In this condition, the peripheral portion of the surface layer material 2 was pinched between the stepped portion 33a of the peripheral die surface 33 and the clamps 52 of the clamp mechanisms 5 in such a manner that the end surface of the peripheral portion of the surface layer material 2 lay on the same plane as the end surface of the stepped portion 33a. Owing to the clamp pressure n of 5.0 kg/cm², the peripheral portion of the surface layer material 2 was held firmly by the clamp mechanisms 5 during vacuum forming, and accordingly, the travel distance R from the end surface of the stepped portion 33a to the end surface of the surface layer material 2 during vacuum forming could be designed to be 0 mm. After that, the air cylinders 61 were actuated to draw down the protruding rods 62 and to store the lifting bases 62b of the protruding rods 62 in the concave portions 31a of the first die 3. In this condition, the surface layer material 2 sagged downward by a certain amount (r = 15 mm) by its gravity, as shown by a dotted line in Figure 5.

Then, the vacuum pump not shown was actuated to draw down the surface layer material 2 through the suction holes 32 by vacuum so as to contact the surface layer material 2 with the first cavity surface 31 closely. Thus, the surface layer material 2 was formed in a predetermined shape.

After that, the liquid urethane raw material was poured and solidified in the same way as in the first preferred embodiment, thereby forming the urethane base 1 integrally with the surface layer material 2.

In the molding apparatus according to the second preferred embodiment, the surface layer material 2 was vacuum formed in a condition in which a certain amount r of the surface layer material 2 was loosened by the surface layer material lifting mechanisms 6 beforehand. Therefore, the elogation ratio of the surface layer material 2 during vacuum forming was decreased by a certain value, and the elogation ratio of the surface layer material 2 was decreased more securely than in the molding apparatus according to the first preferred embodiment.

In the molding apparatus according to the second preferred embodiment, the gap s between each concave portion 31a of the first die 3 and the lifting base 62b of each protruding rod 62 was designed to be 1 mm. However, since the surface layer material 2 was not preheated in contrast to the material used in the conventional molding apparatus, and was vacuum formed at a relatively low temperature, the gaps s did not give clear marks on the designed outer surface of the surface layer material 2 and caused no problem.

Further in the molding apparatus according to the second preferred embodiment, the elogation of the surface layer material 2 during vacuum forming was lessened owing to the both functions of the clamp mechanisms 5 and the surface layer material lifting mechanisms 6.

Furthermore, in the first and second preferred embodiments, the two-layered material comprising a PVC skin layer and a PVC foam layer was used as the surface layer material 2, but any synthetic resin surface layer material can be used as long as it satisfy a certain 30% modulus value, such as a two-layered surface layer material comprising a skin layer such as PVC and TPO and a foam layer such as PVC foam, olefin foam and urethane foam, a surface layer material comprising a skin layer alone, a surface layer material comprising a fabric treated against ventilation (e.g., a back coated fabric, a fabric on the surface of which a ventilation-proof sheet is glued removably after forming), and so on.

Having now fully described the present invention, it will be apparent to one of ordinary skill in the art that many changes and modifications can be made thereto without departing from the spirit or scope of the present invention as set forth herein including the appended claims.

## Claims

1. A method of forming a product integral with a surface layer material which is provided with an urethane base and a surface layer material formed integrally on the surface of said urethane base, comprising the steps of:
placing a surface layer material having a 30% modulus of 0.1 to 2.0 kg/cm at an urethane forming temperature at a forming die which is capable of vacuum forming and urethane forming and controlled at the urethane forming temperature, and drawing down said surface layer material into close contact with a cavity surface of said forming die by vacuum, thereby vacuum forming said surface layer material in a predetermined shape; and
introducing into a cavity of said forming die a liquid urethane raw material which has a maximum bending load of 30 N or more in a solid condition at room temperature, and solidifying said liquid urethane raw material, thereby forming said urethane base integrally with said surface layer material.

2. A method of forming a product integral with a surface layer material according to claim 1, wherein, in placing said surface layer material at said forming die, a peripheral portion of said surface layer material is movably held at said forming die, and said surface layer material is vacuum formed while being transferred into said cavity surface by a predetermined distance.

3. A method of forming a product integral with a surface layer material according to one of claim 1 and claim 2, wherein, in placing said surface layer material at said forming die, said surface layer material is held at said forming die in a condition in which said surface layer material is loosened by a predetermined amount.

4. A product formed integrally with a surface layer material, comprising an urethane base having a maximum bending load of 30 N or more in a solid condition at room temperature, and a surface layer material which is integrally formed on the surface of said urethane base and composed of a synthetic resin having a 30% modulus of 0.1 to 2.0 kg/cm at an urethane forming temperature.

5. A product formed integrally with a surface layer material according to claim 4, wherein said surface layer material comprises a foam layer composed of polyvinyl chloride, and a skin layer which is integrally formed on the surface of said foam layer and composed of polyvinyl chloride.
